# EUROPÄISCHE PATENTSCHRIFT

(11) **EP 2 046 609 B1**
(45) Veröffentlichungstag und Bekanntmachung des Hinweises auf die Patenterteilung: **01.09.2010**
(21) Anmeldenummer: 07764895.4
(22) Anmeldetag: 28.06.2007
(51) Int. Cl.: B60S 1/08

(54) **VORRICHTUNG ZUM BEFESTIGEN EINES RECHTECKIGEN SENSORS AN EINEM TRÄGERTEIL**
DEVICE FOR FASTENING A RECTANGULAR SENSOR TO A SUPPORT PART
DISPOSITIF POUR FIXER UN CAPTEUR RECTANGULAIRE A UN ELEMENT PORTEUR

(30) Priorität: 20.07.2006 DE 102006033642
(43) Veröffentlichungstag der Anmeldung: 15.04.2009
(73) Patentinhaber: A. Raymond et Cie., 38000 Grenoble (FR)
(72) Erfinder: HÄNSEL, Mathias, 79595 Rümmingen (DE); ECKERT, Thomas, 79713 Bad Säckingen (DE); RHEIN, Axel, 79585 Steinen (DE); CHOUVET, Laurent, 79395 Neuenburg (DE)
(74) Vertreter: Rüttgers, Joachim
(86) Internationale Anmeldenummer: PCT/EP2007/005703
(87) Internationale Veröffentlichungsnummer: WO 2008/009342

(56) Entgegenhaltungen:
- WO-A-01/05636
- WO-A-2005/095168

## Beschreibung

Die Erfindung betrifft eine Vorrichtung zum Befestigen eines rechteckigen Sensors an einem Trägerteil.

Aus DE 199 33 640 A1 ist eine Vorrichtung zum Befestigen eines rechteckigen Sensors an einem Trägerteil offenbart, bei der der Sensor über Bügelteile, die mit an Stegteilen ausgebildeten Zapfen zusammenwirken, mit einer Basisplatte, an der die Stegteile angeformt sind, verbindbar ist, wobei die Basisplatte wiederum mit einem Trägerteil verbindbar ist. Diese Vorrichtung ist jedoch verhältnismäßig kompliziert aufgebaut.

Die DE 103 26 853 A1 offenbart eine Vorrichtung zum Befestigen eines kreisförmigen Sensors an einem Trägerteil, die eine Basisplatte aufweist, an der um eine kreisförmige Aufnahmeausnehmung eine kreisförmige Führungswand verläuft. An der Führungswand sind radial nach außen vorstehende Rastnasen ausgebildet, die mit einem Bügelteil in Eingriff kommen, das einen in die Aufnahmeausnehmung eingefügten und an der Führungswand anliegenden, im Querschnitt kreisförmigen Sensor überspannt. Diese Vorrichtung ist jedoch verhältnismäßig materialaufwändig ausgebildet, was sich insbesondere bei großen Sensoren mit einem großen Umfang als kostenaufwändig erweist.

Eine gattungsgemäße Vorrichtung zum Befestigen eines Sensors ist aus der WO-A-2005/095168 bekannt.

Der Erfindung liegt die Aufgabe zugrunde, eine Vorrichtung zum Befestigen eines rechteckigen Sensors an einem Trägerteil anzugeben, mit der auch verhältnismäßig große dimensionierte Sensoren mit einem relativ geringen Materialaufwand stabil und passgenau an dem Trägerteil befestigbar sind.

Diese Aufgabe wird bei einer Vorrichtung zum Befestigen eines rechteckigen Sensors an einem Trägerteil mit den Merkmalen des Patentanspruches 1 gelöst.

Dadurch, dass die erfindungsgemäße Vorrichtung lange Führungswände und gegenüber den Führungswänden kürzere Anschlagteile aufweist, ist bei einem verhältnismäßig geringen Materialaufwand eine zuverlässige Fixierung des Sensors sichergestellt.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: zeigt in einer perspektivischen Ansicht ein Ausführungsbei- spiel einer erfindungsgemäßen Vorrichtung mit einem ein- gefügten Sensor und
- Fig. 2: in einer perspektivischen Ansicht das Ausführungsbeispiel gemäß Fig. 1 mit Blick in Einführrichtung des Sensors auf eine den Sensor aufnehmende Aufnahmeausnehmung, die in einer Basisplatte eingebracht ist.

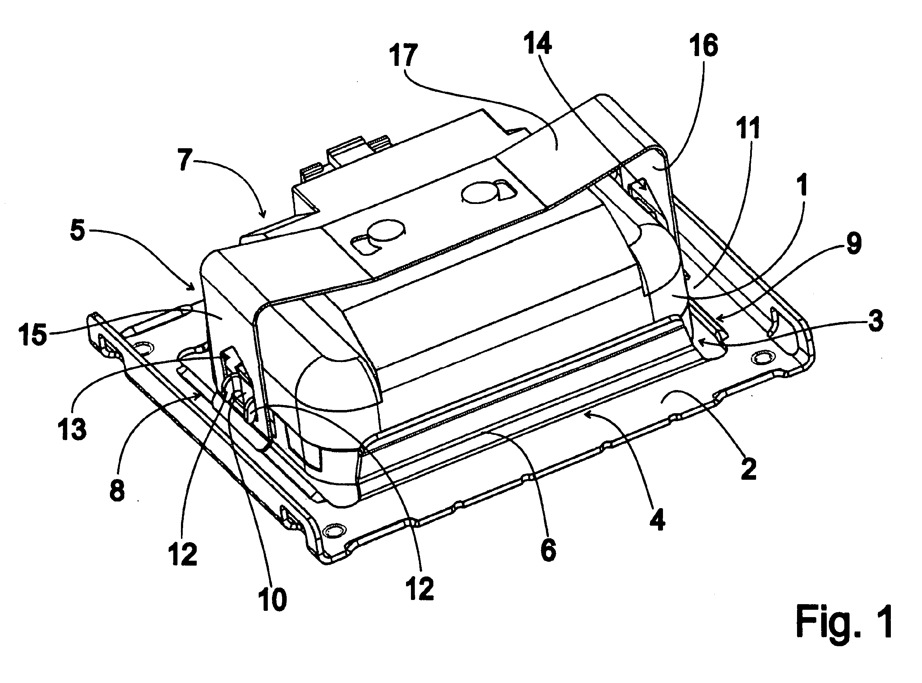

Fig. 1 zeigt in einer perspektivischen Ansicht ein Ausführungsbeispiel einer als Befestigungskäfig ausgebildeten erfindungsgemäßen Vorrichtung zum Befestigen eines rechteckigen Sensors 1 an einem in Fig. 1 nicht dargestellten Trägerteil. Die vorzugsweise aus Blech gefertigte erfindungsgemäße Vorrichtung gemäß Fig. 1 verfügt über eine mit Schmelzkleber belegte rechteckige Basisplatte 2, in deren Mitte eine ebenfalls rechteckige Aufnahmeausnehmung 3 ausgebildet ist. An den einander gegenüberliegenden langen Randseiten 4, 5 der Aufnahmeausnehmung 3 sind Führungswände 6, 7 ausgebildet, die sich in einer Richtung von der Basisplatte 2 wegweisend erstrecken und an einer langen Wand des Sensors 1 anliegen.

An den kurzen Randseiten 8, 9 der Aufnahmeausnehmung 3 sind in der Mitte Anschlagteile 10, 11 ausgebildet, die sich in der gleichen Richtung wie die Führungswände 6, 7 von der Basisplatte 2 wegweisend erstrecken. An den Anschlagteilen 10, 11 sind von der Aufnahmeausnehmung 3 wegweisend vorstehende Nasenabschnitte 12 ausgebildet, die durch Eingriffausnehmungen 13, 14 durchgreifen, die in Schenkelteilen 15, 16 eines mit dem Sensor 1 verbundenen und diesen überspannenden, im Wesentlichen U-förmigen Spannbügels 17 eingebracht sind.

Zweckmäßigerweise weisen die Nasenabschnitte 12 an den Anschlagteilen 10, 11 einen unterschiedlichen Abstand auf, und die Breiten der Eingriffausnehmungen 13, 14 sind entsprechend ebenfalls unterschiedlich, so dass dadurch eine Indexierung bezüglich der Ausrichtung des Sensors 1 in Bezug auf die erfindungsgemäße Vorrichtung geschaffen ist.

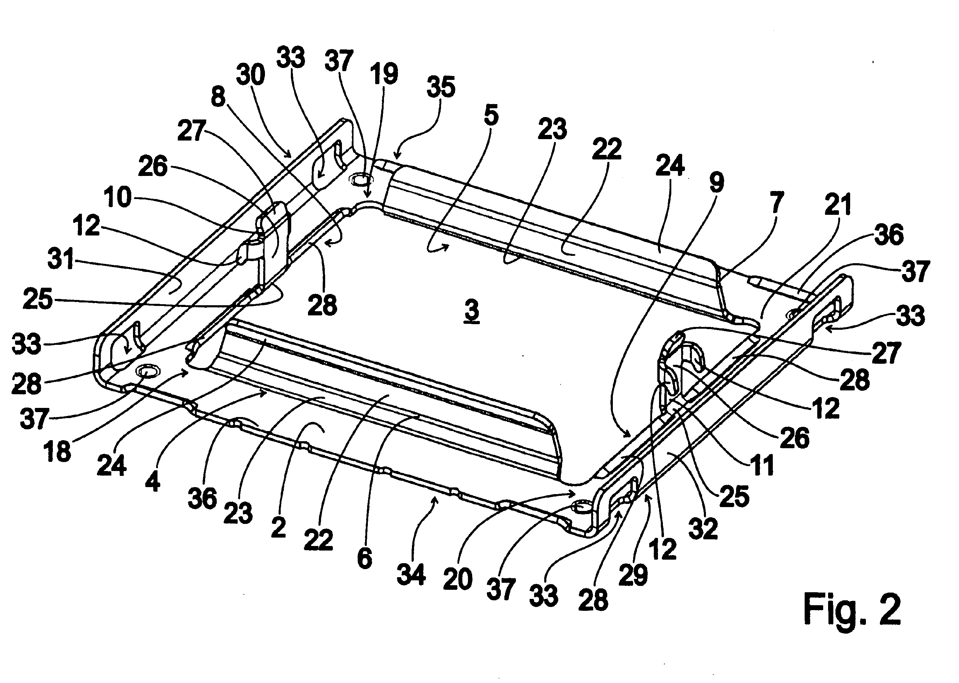

Fig. 2 zeigt in einer perspektivischen Ansicht das Ausführungsbeispiel gemäß Fig. 1. Aus Fig. 2 ist ersichtlich, dass sich die Führungswände 6, 7 im Wesentlichen über die gesamte Länge der langen Randseiten 4, 5 von einem Eckbereich 18, 19 in den gegenüberliegenden Eckbereich 20, 21 erstrecken, in denen die jeweiligen langen Randseiten 4, 5 enden. Jede Führungswand 6, 7 weist für eine gewisse Biegsamkeit einen im Wesentlichen rechtwinklig zu der Basisplatte 2 ausgerichteten flachen Führungsabschnitt 22 auf, der über einen Anstellabschnitt 23 mit der Basisplatte 2 in Verbindung steht. Die Anstellabschnitte 23 erstrecken sich von der Basisplatte 2 schräg in Richtung der Anschlagteile 10, 11, so dass die Führungsabschnitte 22 gegenüber den langen Randseiten 4, 5 nach innen versetzt sind. Dadurch wird ein Überlauf von Schmelzkleber in die Aufnahmeausnehmung 3 bis an den Sensor 1 vermieden.

An den den Anstellabschnitten 23 gegenüberliegenden Seiten der Führungsabschnitte 22 weisen die Führungswände 6, 7 jeweils einen Zentrierabschnitt 24 auf, die von der Aufnahmeausnehmung wegweisend nach außen schräg angestellt sind, um ein Einführen des Sensors 1 zwischen die aufgrund des flachen Anliegens den Sensor 1 gegen Verdrehen sichernden Fügungsabschnitte 22 zu erleichtern.

Die in der Mitte der kurzen Randseiten 8, 9 angeordneten, Material sparend gegenüber der Länge der kurzen Randseiten 8, 9 und damit auch gegenüber der Länge der Führungswände 6, 7 wesentlich kürzeren Anschlagteile 10, 11 sind entsprechend den Führungswänden 6, 7 mit einem an die Basisplatte 2 angeformten Anstellabschnitt 25, einen sich im Wesentlichen rechtwinklig zu der Basisplatte 2 erstreckenden Anschlagabschnitt 26 und einem Zentrierabschnitt 27 ausgebildet. Weiterhin lässt sich Fig. 2 entnehmen, dass die Nasenabschnitte 12 als Flachzungen an die Anschlagabschnitte 26 angeformt und von der Aufnahmeausnehmung 3 wegweisend umgebogen sind.

Beidseitig der Anschlagteile 10, 11 sind an den kurzen Randseiten 8, 9 innere Kantenanstellungen 28 ausgebildet, die sich von der Basisplatte 2 wegweisend in Richtung der Anschlagteile 10, 11 angestellt sind. Die inneren Kantenanstellungen 28 erstrecken sich von dem jeweiligen Anschlagteil 10, 11 in den jeweils angrenzenden Eckbereich 18, 19, 20, 21. Die inneren Kantenanstellungen 28 dienen dem Versteifen der Basisplatte 2.

Auf den den kurzen Randseiten 8, 9 gegenüberliegenden kurzen Außenseiten 29, 30 der Basisplatte 2 sind rechtwinklig zu der Basisplatte 2 angestellte und parallel zu den Anschlagteilen 10, 11 erstreckende Versteifungswände 31, 32 angeformt, die der Stabilisierung der Basisplatte 2, durch endseitig eingebrachte Greifausnehmungen 33 dem Handhaben der Basisplatte 2 mit einem in Fig. 2 nicht dargestellten Greifwerkzeug und dem Einclipsen einer in Fig. 2 nicht dargestellten Abdeckung dienen.

An den den langen Randseiten 4, 5 gegenüberliegenden langen Außenseiten 34, 35 der Basisplatte 2 sind äußere Kantenanstellungen 36 ausgebildet, die entsprechend den inneren Kantenanstellungen 28 zum Versteifen dienen.

Die Kombination der Versteifungswände 31, 32 sowie der Kantenanstellungen 28, 36 führt zu einer erheblichen Stabilisierung der erfindungsgemäßen Vorrichtung insbesondere gegenüber Verwinden, so dass zum Befestigen der erfindungsgemäßen Vorrichtung an dem Trägerteil Material sparend Schmelzkleber lediglich zwischen den langen Außenseiten 34, 35 und den langen Randseiten 4, 5 aufgebracht werden muss.

Um bei Einsatz eines Schmelzklebers zum Befestigen der Basisplatte 2 an dem Trägerteil einen definierten Abstand sowie ein definiertes Fließverhalten des Schmelzklebers zu erzielen, sind in den Eckbereichen 18, 19, 20, 21 der Basisplatte 2 Sicken 37 eingeformt, die über die den Führungswänden 6, 7 und den Anschlagteilen 10, 11 gegenüberliegende Seite der Basisplatte 2 vorstehen.

## Patentansprüche

1. Vorrichtung zum Befestigen eines rechteckigen Sensors (1) an einem Trägerteil mit einer Basisplatte (2), mit einer in die Basisplatte (2) eingebrachten rechteckförmigen oder quaderförmigen Aufnahmeausnehmung (3) mit Randseiten (4, 5, 8, 9), die jeweils in einem Abstand parallel zueinander verlaufen, mit an einander gegenüberliegenden Randseiten (4, 5) der Aufnahmeausnehmung (3) angeformten, rechtwinklig zu der Basisplatte (2) ausgerichteten Führungswänden (6, 7), die sich zwischen zwei eine Randseite (4, 5) abschließenden Eckbereichen (18, 20; 19, 21) der Aufnahmeausnehmung (3) erstrecken, und mit an den anderen Randseiten (8, 9) jeweils in deren Mittenbereich angeformten, gegenüber der Länge der Führungswände (6, 7) kürzeren Anschlagteilen (10, 11), die jeweils wenigstens einen rechtwinklig zu der Basisplatte (2) ausgerichteten Anschlagabschnitt (26) aufweisen, **dadurch gekennzeichnet dass** die Führungswände wenigstens mit einem Führungsabschnitt (22) ausgestattet sind, und die Führungsabschnitte (22) und die Anschlagabschnitte (26) bei eingefügtem Sensor (1) an einer Wand des Sensors (1) anliegen.

2. Vorrichtung nach Anspruch 1, **dadurch gekennzeichnet, dass** jede Führungswand (6, 7) einen Zentrierabschnitt (24) aufweist, der an dem Führungsabschnitt (22) an der von der Basisplatte (2) wegweisenden Seite von der Aufnahmeausnehmung (3) wegweisend abgewinkelt angesetzt ist.

3. Vorrichtung nach Anspruch 1 oder Anspruch 2, **dadurch gekennzeichnet, dass** jede Führungswand (6, 7) einen Anstellabschnitt (23) aufweist, der zwischen dem Führungsabschnitt (22) und der Basisplatte (2) angeordnet ist und sich von der betreffenden Randseite (4, 5) der Basisplatte (2) von der Basisplatte (2) weg schräg in Richtung des Führungsabschnittes (22) erstreckt.

4. Vorrichtung nach einem der Ansprüche 1 bis 3, **dadurch gekennzeichnet, dass** jedes Anschlagteil (10, 11) wenigstens einen von der Aufnahmeausnehmung (3) wegweisenden Nasenabschnitt (12) aufweist.

5. Vorrichtung nach einem der Ansprüche 1 bis 4, **dadurch gekennzeichnet, dass** an den mit Anschlagteilen (10, 11) ausgebildeten Randseiten (8, 9) der Aufnahmeausnehmung (3) außenseitig gegenüberliegende Außenseiten (29, 30) der Basisplatte (2) rechtwinklig zu der Basisplatte (2) angestellte Versteifungswände (31, 32) angeformt sind.

6. Vorrichtung nach einem der Ansprüche 1 bis 5, **dadurch gekennzeichnet, dass** seitlich der Anschlagteile (10, 11) an den Randseiten (8, 9) innere Kantenanstellungen (28) angeformt sind.

7. Vorrichtung nach einem der Ansprüche 1 bis 6, **dadurch gekennzeichnet, dass** an Außenseiten (34, 35), die mit Führungswänden (6, 7) ausgebildeten Randseiten (4, 5) gegenüberliegen, äußere Kantenanstellungen (36) angeformt sind.

8. Vorrichtung nach einem der Ansprüche 1 bis 7, **dadurch gekennzeichnet, dass** die Aufnahmeausnehmung (3) rechteckförmig ist und dass die Führungswände (6, 7) an den langen Randseiten (4, 5) und die Anschlagteile (10, 11) an den kürzeren Randseiten (8, 9) ausgebildet sind.

## Claims

1. Device for fastening a rectangular sensor (1) to a support part having a base plate (2), having a rectangular or cuboid receiving recess (3) which is made in the base plate (2) and has edges (4, 5, 8, 9) which are each parallel to one another and a distance apart, having guide walls (6, 7) which are formed on opposite edges (4, 5) of the receiving recess (3), are oriented at right angles to the base plate (2) and extend between two corner regions (18, 20; 19, 21) of the receiving recess (3) which terminate an edge (4, 5), and having stop parts (10, 11) which are formed at the other edges (8, 9) in each case in the middle region thereof, are shorter than the length of the guide walls (6, 7) and have in each case at least one stop section (26) oriented at right angles to the base plate (2), **characterized in that** the guide walls are equipped at least with one guide section (22), and the guide sections (22) and the stop sections (26) rest against a wall of the sensor (1) when the sensor (1) is inserted.

2. Device according to Claim 1, **characterized in that** each guide wall (6, 7) has a centring section (24) which is attached to the guide section (22), on the side facing away from the base plate (2), angled away from the receiving recess (3).

3. Device according to Claim 1 or Claim 2, **characterized in that** each guide wall (6, 7) has an engagement section (23) which is arranged between the guide section (22) and the base plate (2) and extends from the relevant edge (4, 5) of the base plate (2), obliquely away from the base plate (2) in the direction of the guide section (22).

4. Device according to any of Claims 1 to 3, **characterized in that** each stop part (10, 11) has at least one lug section (12) pointing away from the receiving recess (3).

5. Device according to any of Claims 1 to 4, **characterized in that** stiffening walls (31, 32) set at right angles to the base plate (2) are formed on the outsides (29, 30) of the base plate (2) which are opposite, and on the outside of, edges (8, 9) of the receiving recess (3) which are formed with stop parts (10, 11).

6. Device according to any of Claims 1 to 5, **characterized in that** inner edge engagement means (28) are formed to the sides of the stop parts (10, 11) on the edges (8, 9).

7. Device according to any of Claims 1 to 6, **characterized in that** outer edge engagement means (36) are formed on outsides (34, 35) which are opposite edges (4, 5) formed with guide walls (6, 7).

8. Device according to any of Claims 1 to 7, **characterized in that** the receiving recess (3) is rectangular, and **in that** the guide walls (6, 7) are formed on the long edges (4, 5) and the stop parts (10, 11) on the shorter edges (8, 9).

## Revendications

1. Dispositif pour la fixation d'un détecteur de forme rectangulaire (1) sur un élément faisant office de support, comprenant une plaque de base (2), un évidement de réception de forme rectangulaire ou de forme carrée (3) ménagé dans la plaque de base (2), comprenant des portions de rive (4, 5, 8, 9) qui s'étendent avec un certain écartement respectivement suivant une disposition parallèle, des parois de guidage (6, 7) réalisées solidaires par formage de portions de rives se faisant respectivement face (4, 5) de l'évidement de réception (3), orientées perpendiculairement à la plaque de base (2), qui s'étendent entre deux zones d'angle (18, 20 ; 19, 21) de l'évidement de réception (3) terminant une portion de rive (4, 5), et des éléments de butée (10, 11) réalisées solidaires par formage des autres portions de rive (8, 9) respectivement au niveau de leur partie centrale, plus courtes comparativement à la longueur des parois de guidage (6, 7), qui comportent respectivement au moins une portion formant butée (26) orientée perpendiculairement à la plaque de base (2), **caractérisé en ce que** les parois de guidage comportent au moins une portion de guidage (22) et **en ce que** les portions de guidage (22) et les portions formant butée (26) sont en contact d'application contre une paroi du détecteur (1) lorsque le détecteur (1) est inséré en position.

2. Dispositif selon la revendication 1, **caractérisé en ce que** chaque paroi de guidage (6,7) comporte une portion de centrage (24) qui est disposée attenante, orientée vers l'extérieur suivant une disposition angulaire, à la portion de guidage (22), sur le côté de l'évidement de réception (3) qui va en s'écartant de la plaque de base (2).

3. Dispositif selon la revendication 1 ou la revendication 2, **caractérisé en ce que** chaque paroi de guidage (6, 7) comporte une portion de mise en place (23), qui est disposée entre la portion de guidage (22) et la plaque de base (2) et qui s'étend, depuis la portion de rive concernée (4, 5) de la plaque de base (2), en partant de la plaque de base (2) suivant une disposition oblique dans la direction de la portion de guidage (22).

4. Dispositif selon l'une des revendications 1 à 3, **caractérisé en ce que** chaque élément de butée (10, 11) comporte au moins une portion formant ergot (12) qui va en s'écartant depuis l'évidement de réception (3).

5. Dispositif selon l'une des revendications 1 à 4, **caractérisé en ce qu'**au niveau des portions de rive (8, 9), munies d'éléments de butée (10, 11), de l'évidement de réception (3), orientées vers l'extérieur de côté extérieurs opposés (29, 30) de la plaque de base (2), des parois de renforcement (31, 32) disposées perpendiculairement à la plaque de base (2) sont disposées solidaires par formage.

6. Dispositif selon l'une des revendications 1 à 5, **caractérisé en ce que**, sur le côté des éléments de butée (10, 11), des plages d'attaque de rive intérieures (28) sont réalisées solidaires par formage des portions de rive (8, 9).

7. Dispositif selon l'une des revendications 1 à 6, **caractérisé en ce que** des plages d'attaque de rive extérieures (36) sont réalisées solidaires par formage des côtés extérieurs (34, 35) opposés aux portions de rive (4, 5) qui sont munies de parois de guidage (6, 7).

8. Dispositif selon l'une des revendications 1 à 7, **caractérisé en ce que** l'évidement de réception (3) a une forme rectangulaire et **en ce que** les parois de guidage (6, 7) sont disposées sur les portions de rive les plus longues (4, 5) et les éléments de butée (10, 11) sont disposés sur les portions de rive les plus courtes (8, 9).
